# FASCICULE DE BREVET EUROPEEN

(11) **EP 3 003 546 B1**
(45) Date de publication et mention de la délivrance du brevet: **14.11.2018**
(21) Numéro de dépôt: 14803763.3
(22) Date de dépôt: 20.05.2014
(51) Int. Cl.: B01J 8/00

(54) **REACTEUR DE RAFFINAGE ET/OU DE PETROCHIMIE AVEC SYSTÈME DE PILOTAGE DE L'ALIMENTATION DU DISPOSITIF DE CHARGEMENT EN PARTICULES SOLIDES**
RAFFINERIE UND/ODER PETROCHEMISCHER REAKTOR MIT STEUERUNGSYSTEM FÜR DIE ABGABEVORRICHTUNG ZUM LADEN MIT FESTEN TEILCHEN
REFINERY AND/OR PETROCHEMICAL REACTOR WITH CONTROL SYSTEM FOR THE DISPENSING OF THE SOLID PARTICLES LOADING DEVICE

(30) Priorité: 30.05.2013 FR 1354904
(43) Date de publication de la demande: 13.04.2016
(73) Titulaire: TOTAL RAFFINAGE CHIMIE, 92400 Courbevoie (FR)
(72) Inventeur: MAIRESSE, Julien, F-33190 La Reole (FR); BERRIC, Guillaume, F-76290 Fontaine-la-Mallet (FR); BOCE, Xavier, F-76600 Le Havre (FR)
(74) Mandataire: Radault, Gabrielle
(86) Numéro de dépôt international: PCT/FR2014/051160
(87) Numéro de publication internationale: WO 2014/191652

(56) Documents cités:
- EP-A1- 1 041 022
- EP-A2- 1 127 816
- FR-A1- 2 771 721
- FR-A1- 2 949 755
- US-A- 2 956 840
- US-A- 4 286 910
- US-A- 5 105 981
- US-A1- 2008 216 918

## Description

L'invention concerne l'alimentation d'un dispositif de distribution pour charger en en particules solides un réacteur de raffinage et/ou de pétrochimie.

Il est connu de charger des réacteurs de ce type avec des particules solides à l'état divisé. Ces particules peuvent par exemple se présenter sous forme de billes, de grains, de cylindres, de pastilles, de bâtonnets, ou de toute autre forme et ont en général des dimensions relativement faibles, par exemple de l'ordre du centimètre.

Les particules peuvent être en particulier des grains de catalyseur solide, généralement extrudés, réalisés soit sous forme régulière, soit sous forme de bâtonnets mono ou multilobes, dont les dimensions peuvent varier selon les cas de quelques dixièmes de millimètres à quelques centimètres. C'est à cette application, dite de « chargement dense », de grains de catalyseurs dans un réacteur de raffinage et/ou de pétrochimie, que l'on se référera dans la suite de la présente description.

Par « chargement dense », on entend un chargement par effet de pluie optimisée afin de permettre de charger dans un minimum de temps un maximum de particules solides de façon homogène et la plus uniforme possible.

Le document WO 2010/076522, au nom de la Demanderesse, décrit un exemple de dispositif de distribution de particules solides dans un réacteur. Ce dispositif de distribution est installé dans une ouverture de remplissage du réacteur située en haut du réacteur et au centre du réacteur. FR 2949755 A1 et US 2008/0216918 A1 divulguent des dispositifs de chargement dense de particules solides dans une enceinte.

Il est connu de raccorder un dispositif de distribution en particules solides à une réserve de particules solides, au moyen d'un conduit souple ou manche souple, de sorte que les particules solides puissent circuler de la réserve vers le dispositif de chargement, dans la manche souple, du simple fait de la gravité. Les parois de la manche étant souples et classiquement facilement sécables au moyen de ciseaux ou autres, la longueur de la manche est relativement facile à ajuster. L'utilisation d'une manche souple permet ainsi de s'adapter à différentes configurations entre la réserve, par exemple une trémie, et le dispositif de chargement.

Classiquement, pour bloquer le chargement en particules solides, un opérateur se tient à proximité de la manche souple, à l'intérieur du réacteur, et ferme la manche au moyen d'une ficelle. Au cours de tels arrêts de chargement, l'opérateur contrôle par ailleurs la quantité de particules chargées.

Il existe un besoin pour un système permettant d'offrir davantage de sécurité pour l'opérateur.

Il a été envisagé de prévoir une vanne pour fermer une sortie de la trémie. Néanmoins, si un opérateur ferme cette vanne au niveau de la trémie, les particules déjà engagées dans la manche vont continuer à tomber et atteindre le dispositif de distribution. Dit autrement, le réacteur sera chargé pendant une durée relativement longue, le temps que la manche souple se vide.

US 4286910 A, FR 2771721 A1, EP 1041022 A1 et US 2956840 A décrivent des dispositif de transfert de particules entre deux zones comprenant un dispositif de blocage pneumatique réduisant la section efficace d'une manche d'alimentation.

Il est proposé une installation selon la revendication 1 comprenant un ensemble de chargement en particules solides d'un réacteur de raffinage ou de pétrochimie, cet ensemble comprenant :
- un dispositif de distribution pour charger par effet de pluie le réacteur en particules solides, ledit dispositif étant agencé de façon à homogénéiser et/ou uniformiser le chargement de particules solides dans le réacteur,
- un système d'alimentation du dispositif de distribution, le système d'alimentation comprenant une manche souple destinée à être raccordée à une réserve de particules solides d'une part, et raccordée au dispositif de distribution d'autre part, dans laquelle les particules solides sont aptes à circuler, généralement du haut vers le bas,
- un système de pilotage du système d'alimentation, comprenant :
- un dispositif de blocage des particules solides circulant dans la manche souple, adjacent à une portion de la manche souple et agencé pour, lorsqu'actionné, entrainer en mouvement des parois de la manche souple de façon à réduire une section efficace de cette manche au niveau de ladite portion, et
- un dispositif d'actionnement du dispositif de blocage situé à distance du dispositif de blocage.

Ainsi, en prévoyant des moyens actionnables à distance, et capables de déplacer les parois de la manche souple au niveau d'une section de façon à réduire cette section, et avantageusement de façon à réduire suffisamment cette section efficace pour bloquer le passage des particules solides, on peut permettre à l'opérateur de s'éloigner du conduit et de se tenir simplement au niveau du dispositif d'actionnement du dispositif de blocage.

En outre, on peut prévoir de positionner le dispositif de blocage relativement proche du dispositif de distribution, de sorte qu'en cas de blocage des particules au niveau de la portion de manche souple adjacente au dispositif de blocage, le dispositif de distribution cesse rapidement d'être alimenté.

Egalement, lors d'une mise en route, on pourra prévoir de charger en particules solides la partie de la manche en amont du dispositif de blocage, la manche souple ayant une section efficace réduite au niveau de ce dispositif. Une fois la manche chargée, la manche peut être ouverte, ce qui permet d'atteindre un régime permanent de chargement relativement rapidement, et donc d'assurer une certaine qualité de chargement.

Les particules solides peuvent avantageusement comprendre des particules de catalyseur et/ou des billes inertes.

Le dispositif de distribution est agencé de façon à homogénéiser et/ ou uniformiser le chargement, par exemple à permettre un chargement parfaitement homogène et uniforme. En particulier, le dispositif de chargement améliore le caractère homogène et/ou le caractère uniforme du chargement, par rapport au chargement qui serait obtenu avec une simple sortie de tuyère.

Le dispositif de distribution peut comprendre des moyens de répartition des particules solides, pour conférer aux particules solides une vitesse avec une composante perpendiculaire à la direction verticale, afin de rendre le chargement plus uniforme et homogène. Ces moyens de répartition peuvent par exemple comprendre :
- des pâles, par exemple des lanières souples, et éventuellement, notamment lorsque ces pâles ont une extrémité fixée à un arbre vertical, un moteur pour entrainer ces pâles en rotation autour d'un axe vertical, et/ou
- des ouvertures débouchant radialement.

L'invention n'est en rien limitée à une forme particulière des moyens de répartition.

Le dispositif de distribution peut avantageusement comprendre en outre des capteurs pour surveiller l'état du chargement, et des actionneur pour agir sur les moyens de répartition en fonction des mesures issues des capteurs.

Par « à distance », on entend que la distance entre le dispositif d'actionnement et le dispositif de blocage est supérieure ou égale au rayon de la base du réacteur. Ainsi, l'opérateur peut se tenir relativement éloigné et à l'extérieur du réacteur lors du chargement.

Le dispositif d'actionnement peut par exemple comprendre un ordinateur d'un poste de commande derrière lequel peut se tenir l'opérateur.

Dans un mode de réalisation avantageux, le dispositif de blocage peut être agencé de façon à pousser au moins certaines des parois de la manche souple contre les autres parois, lorsqu'actionné.

Avantageusement, le dispositif de blocage peut être agencé de façon à pousser les parois de la manche souple contre un support rigide ou semi-rigide.

Avantageusement, le système d'alimentation peut en effet comprendre en outre un conduit rigide (ou semi-rigide, par exemple en plastique semi-rigide) à l'intérieur duquel passe la manche souple. Ce conduit peut par exemple être solidarisé au dispositif de distribution, ou non.

Ainsi, le dispositif de blocage peut être agencé de façon à plaquer les parois de la manche souple contre le conduit rigide.

Le dispositif de blocage peut avantageusement comprendre un élément de poussée, destinée à venir en contact avec la paroi souple et à entrainer cette paroi souple en mouvement, par exemple un élément rigide du type tige, un élément gonflable du type ballon, ou autre.

Le dispositif de blocage peut par exemple comprendre une tige (d'un système de piston ou de vérin par exemple) entraînable en mouvement dans une direction transverse par rapport à une direction longitudinale de la manche souple, pour venir pousser la manche souple contre le conduit rigide. On peut prévoir de fixer à l'extrémité de cette tige un organe d'appui s'étendant transversalement par rapport à la direction longitudinale de la tige, afin que le contact entre la tige et la manche souple soit relativement étendu et non ponctuel.

Avantageusement, le dispositif de blocage peut être apte à passer lorsqu'il est actionné d'un état inactif, dans lequel la section efficace de la manche souple reste relativement élevée, à un état actif, dans lequel ce dispositif déplace les parois de la manche souple de façon à réduire la section efficace de cette manche.

Avantageusement, le dispositif peut être aussi apte à passer de l'état actif à l'état inactif, suite à une commande ou une absence de commande issue du dispositif d'actionnement. Le système peut être agencé de sorte que lorsque le dispositif de blocage passe de l'état actif à l'état inactif, les parois de la manche souple se déplacent de façon à agrandir la section efficace et autoriser le passage des particules.

Le système peut être agencé pour supporter plusieurs cycles de passage de l'état actif vers l'état inactif puis vers l'état actif. Dit autrement, l'opérateur peut choisir d'arrêter et de redémarrer le chargement lorsqu'il le souhaite et autant de fois qu'il le souhaite.

L'actionnement du dispositif de blocage peut être pneumatique et/ou électrique. Un actionnement pneumatique peut toutefois s'avérer particulièrement judicieux lorsque l'environnement est celui d'une atmosphère explosive, comme cela peut être le cas en raffinerie. Un actionnement pneumatique peut notamment permettre de satisfaire relativement facilement à des exigences de sécurité, par exemple à la réglementation ATEX (Atmosphères Explosives) ou autre.

Dans un mode de réalisation avantageux, le dispositif de blocage peut comprendre un élément de ballon en communication pneumatique avec un conduit d'alimentation en gaz.

Ainsi, lorsque l'on commande l'arrivée d'air dans le ballon, le ballon se gonfle et pousse donc la manche souple contre les parois du conduit rigide de sorte que les particules solides restent bloquées.

L'élément de ballon peut être avantageux en ce qu'il est relativement léger et peu encombrant à l'état inactif.

Avantageusement et de façon non limitative, lorsque le dispositif de blocage comprend un ballon, ce ballon peut être raccordé à un réseau pneumatique au moyen d'un seul conduit. On pourra par exemple prévoir un élément distributeur d'air pour raccorder ce conduit à un conduit d'arrivée d'air et à un conduit d'échappement de l'air. Ainsi, l'encombrement au niveau du ballon reste réduit, permettant ainsi de laisser de l'espace dégagé pour une éventuelle intervention humaine.

Dans un mode de réalisation alternatif, on pourrait bien entendu prévoir un ballon définissant une entrée pour l'arrivée d'air et une sortie pour l'évacuation d'air.

Avantageusement et de façon non limitative, le ballon peut comprendre deux parties planes en matériau souple solidarisées entre elles de façon étanche, par exemple deux parties en poly(p-phénylènetéréphtalamide) ou Kevlar®.

La solidarisation peut être obtenue par soudure ou autre. Ainsi lorsque le ballon est dégonflé, il reste relativement plat.

En outre, en choisissant une matière relativement rigide comme le Kevlar®, on peut connaître le volume du ballon gonflé relativement précisément, ce volume restant relativement stable avec le temps.

Bien entendu, l'invention n'est pas limitée à ce type de ballon et on pourrait tout-à-fait prévoir de choisir un ballon soufflé en matériau souple, par exemple en caoutchouc.

Avantageusement et de façon non limitative, le dispositif de blocage peut comprendre en outre un élément de tôle, de forme générale plane, à l'intérieur du ballon. Cet élément de tôle peut permettre de s'assurer qu'à l'état dégonflé, l'élément de ballon est bien plat.

Le système d'actionnement peut comprendre un élément de pompe, capable de fournir du gaz sous pression, par exemple de l'air, un élément de pompe à vide pour dégonfler le ballon, un élément de jauge de pression pour surveiller la pression, un élément de détendeur d'air afin d'éviter que l'air sous pression destiné à remplir le ballon ait une pression trop élevée par rapport à ce qui pourrait être supporté par le ballon, et/ou autre.

L'invention n'est bien entendu pas limitée à un dispositif de blocage agencé pour venir pousser les parois les unes contre les autres.

Le dispositif de blocage pourrait par exemple comprendre une cordelette apte à entourer la manche souple sur une section donnée, et un anneau, la cordelette étant suffisamment longue pour pouvoir être tirée à distance, de sorte que lorsque l'opérateur tire sur les deux extrémités de la cordelette, les parois de la manche souple se resserrent et viennent empêcher le passage des particules solides.

Il est en outre proposé d'utiliser l'ensemble décrit ci-dessus pour gérer le chargement en particules de catalyseur et/ou des billes inertes d'un réacteur de raffinage et/ou de pétrochimie selon la revendication 9.

Il est en outre proposé un procédé de pilotage d'un système d'alimentation d'un dispositif de distribution par effet de pluie pour charger un réacteur de raffinage et/ou de pétrochimie en particules solides selon la revendication 10, le dispositif de distribution étant agencé de façon à homogénéiser et uniformiser le chargement de particules solides, ce système d'alimentation comprenant une manche souple destinée à être raccordée d'une part à une réserve de particules solides et d'autre part au dispositif de distribution, et dans laquelle les particules solides sont aptes à circuler, généralement du haut vers le bas. Le procédé comprend une étape de commande d'actionnement à distance d'un dispositif de blocage des particules circulant dans la manche souple, ce dispositif étant agencé pour déplacer les parois de la manche souple, de façon à réduire une section efficace de cette manche.

Cette étape de commande peut intervenir au cours du chargement, ou bien préalablement au chargement. Par exemple on peut prévoir de réduire la section efficace de la manche, de sorte que lorsque le réservoir est ouvert, la manche se remplit, puis le procédé peut comprendre une étape consistant à commander un déblocage, de sorte que la section efficace réduite de la manche augmente. Les particules remplissant la manche tombent alors vers le dispositif de chargement. Ainsi, on peut atteindre, sans à-coups intempestifs, un régime permanent plus rapidement que si le réservoir était ouvert sur une manche souple non fermée. Dit autrement, on effectue une pré-charge de la manche en particules solides, pour que lors du chargement effectif du dispositif de distribution, le régime permanent soit atteint relativement rapidement. Ceci peut permettre de limiter le risque que certaines ouvertures du dispositif de distribution soient peu ou pas alimentées pendant une telle période de transition, et donc de mieux garantir la qualité du chargement, ce qui peut être particulièrement intéressant dans le cas d'un chargement dense.

Pour arrêter le chargement, on pourra commencer par obturer un passage entre la réserve de particules solides et la manche souple, par exemple une vanne de la trémie. On laisse alors la manche se vider vers le dispositif de distribution de particules solides.

Par exemple, le procédé peut comprendre une étape de commande du gonflement d'un ballon disposé entre la manche souple et un conduit rigide dans lequel une partie de la manche souple est reçue, de façon à comprimer la manche souple contre le produit rigide et ainsi arrêter le flux.

Il est en outre proposé un produit programme d'ordinateur selon la revendication 11 comprenant les instructions pour effectuer les étapes du procédé décrit ci-dessus lorsqu'elles sont exécutées par un processeur.

Le procédé décrit ci-dessus peut en effet être mis en oeuvre dans un dispositif de traitement du type processeur, par exemple un microprocesseur, un microcontrôleur, ou autre.

L'invention sera mieux comprise en référence aux figures, lesquelles illustrent des modes de réalisation donnés à titre d'exemple.

La figure 1 illustre schématiquement un exemple d'ensemble de chargement selon un mode de réalisation de l'invention.

La figure 2 montre schématiquement un exemple de système de pilotage d'un ensemble de chargement selon un mode de réalisation de l'invention.

La figure 3 montre schématiquement un exemple d'élément de ballon, pour un ensemble selon un mode de réalisation de l'invention.

La figure 4 est un logigramme illustrant un exemple de procédé selon un mode de réalisation de l'invention.

Des références identiques peuvent être utilisées d'une figure à l'autre pour désigner des éléments identiques ou similaires, dans leur forme ou dans leur fonction.

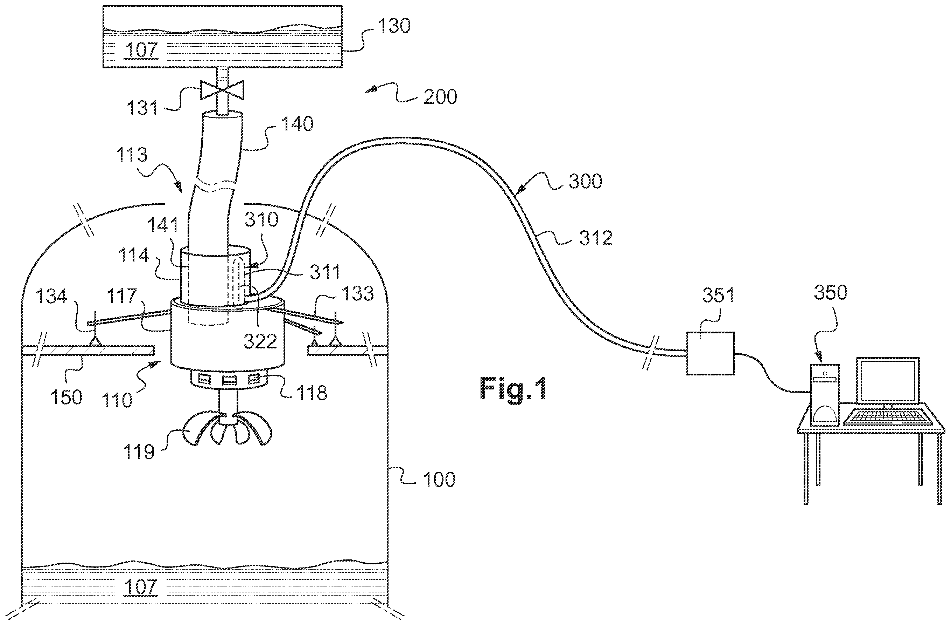

En référence à la figure 1, un réacteur 100 définit une ouverture 113 pour le passage d'un dispositif de distribution 110 de particules solides 107. Le dispositif de distribution 110 peut être du type de celui décrit dans le document WO 2010/076522.

Ce réacteur 100 mesure environ 5 ou 6 mètres de hauteur ou plus selon les cas, et sa base a un diamètre de l'ordre de 3 ou 4 mètres ou davantage encore.

Le dispositif de distribution 110 permet le chargement du réacteur 100 en billes inertes (non représentées), dans le fond du réacteur, puis également en particules de catalyseur 107.

Ce type de réacteur 100 est utilisé dans l'industrie pétrolière ou pétrochimique. Il s'agit d'un réacteur de raffinage ou de pétrochimie (de conception bien connue de l'homme du métier) dans lequel une charge d'hydrocarbures s'écoule à travers le lit de catalyseur 107 et le lit de billes inertes non représenté dans des conditions déterminées de température et de pression. Les particules solides de catalyseur peuvent être des billes extrudées poreuses comprenant usuellement des composés métalliques.

Dans ce mode de réalisation, des pâles 119, par exemple en forme de lanières, disposées à la sortie du dispositif de chargement 110 permettent de mieux répartir des particules solides dans le réacteur 100.

Le dispositif de distribution 110 définit des ouvertures 118 à travers lesquelles s'écoulent les particules solides.

Ce dispositif de distribution 110 comprend un corps principal 117 ou fût, en métal, ainsi qu'une rehausse 114, également en métal, ou éventuellement dans un matériau semi-rigide non métallique, destinée à l'alimentation en particules solides du dispositif de distribution. La rehausse 114 est montée sur le fût 117 au moyen de bagues et de tubes non représentés.

Le dispositif de distribution 110 repose sur un plateau 150 du réacteur 100, au moyen de bras 133 montés sur le fût 117 et de pieds rotulés 134 à l'extrémité des bras 133 respectifs.

Le dispositif de distribution 110 est alimenté en particules solides par un système d'alimentation 200. Ce système d'alimentation 200 comprend une manche souple 140, par exemple une manche en plastique souple, en tissu, en fibres ou autre.

Cette manche souple 140 est raccordée d'une part à une réserve de particules solides 130, par exemple une trémie, et d'autre part au dispositif de distribution 110 par des moyens standards de raccordement non spécifiques à l'invention.

Lorsqu'une vanne 131 de sortie de la trémie 130 est ouverte, les particules solides 107 peuvent circuler, du fait de la gravité, dans cette manche souple 140, et arrivent ainsi au dispositif de distribution 110.

Une portion 141 de la manche souple 140, est reçue dans la rehausse 114, et traverse cette rehausse 114.

L'installation de chargement comporte en outre un système de pilotage 300 du chargement en particules solides de l'enceinte 100.

Ce système de pilotage 300 comprend un dispositif de blocage 310 des particules circulant dans la manche souple 140. Ce dispositif de blocage 310 comprend ici un élément de ballon 311 intercalé entre la portion 141 de la manche souple, et les parois rigides de la rehausse 114.

Le ballon 311 est en communication pneumatique avec un seul conduit 312. Ce conduit 312 sert donc à la fois à alimenter le ballon en air, et à évacuer l'air issu du ballon lors du dégonflage.

Le système de pilotage 300 comporte en outre un dispositif d'actionnement 350 du dispositif de blocage 310. Ce dispositif d'actionnement 350, par exemple un ordinateur, un téléphone intelligent, automate programmable ou autre, est distant du dispositif de blocage 310. En particulier, ce dispositif d'actionnement peut être situé, et de préférence est situé, en dehors de l'enceinte 100. Ainsi, il n'est plus nécessaire à l'opérateur de venir se déplacer à l'intérieur de l'enceinte 100 pour fermer la manche souple 140.

Le dispositif d'actionnement 350 peut comprendre une interface utilisateur, par exemple un clavier, un écran, et/ou autre.

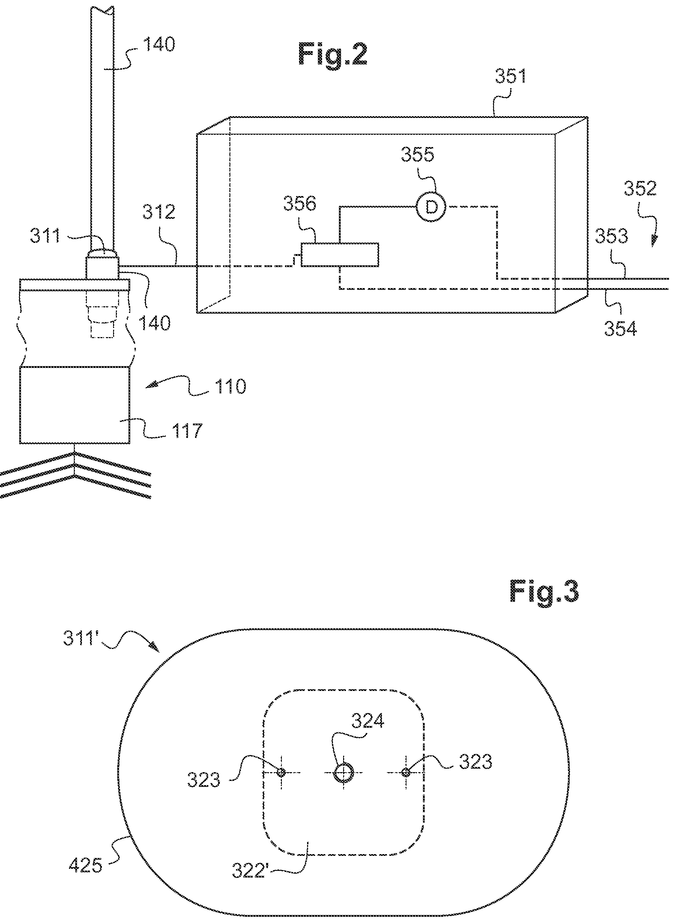

Un pupitre de commande à distance 351 (voir Figure 2) permet d'adapter le réseau pneumatique 352 pour gonfler ou dégonfler le ballon 311.

Ce pupitre de commande à distance 351 peut être branché sur un conduit d'arrivée d'air 353 et sur un conduit d'échappement 354 du réseau pneumatique 352. Ce pupitre 351 peut comprendre un détendeur d'air 355 pour réduire la pression de l'air issue du conduit d'arrivée d'air 353. En effet, le ballon 311 peut être conçu de façon à ne supporter que des pressions relativement faibles, par exemple inférieures ou égales à 0,5 bar.

Ce détendeur d'air peut ainsi permettre de faire passer la pression de l'air issue du conduit 353 d'une valeur de 1 bar, par exemple à une valeur de 0,3 bar.

Un distributeur d'air « 2/1 » 356 permet de réduire le nombre de conduits raccordés au ballon 311 à 1. Lors du gonflage du ballon 311, ce distributeur d'air 356 assure le raccord pneumatique entre le conduit 312 et le conduit 353, le conduit 312 étant isolé du conduit 354. Lorsqu'au contraire on souhaite dégonfler le ballon, le distributeur d'air isole le conduit 312 du conduit 353 et raccorde le conduit 312 au conduit 354.

En variante on pourrait tout à fait prévoir que le ballon définisse une entrée et une sortie d'air, distinctes l'une de l'autre, un conduit d'entrée étant raccordé au conduit d'arrivée d'air 353 et le conduit de sortie étant raccordé au conduit d'échappement d'air 354, et/ou à une pompe à vide. Deux vannes respectives, permettraient d'assurer le gonflage/dégonflage du ballon. Néanmoins, la solution de la figure 2, dans laquelle un seul conduit est raccordé au ballon 311, permet de limiter l'encombrement dans l'enceinte, et notamment l'encombrement au niveau du trou d'homme permettant ainsi un accès rapide au plateau si besoin était.

Lorsque l'opérateur saisit sur l'ordinateur 350 des données pour indiquer qu'il souhaite fermer la manche 140, un message de commande est transmis au pupitre 351 et le distributeur d'air raccorde le conduit 312 au conduit 353. Le ballon 311 est ainsi gonflé, du fait de l'arrivée d'air issue de ce conduit 353. Le gonflement de ce ballon 311 à l'intérieur de la rehausse 114 vient plaquer les parois de la manche 140, au niveau de la portion 141 contre les parois rigides de la rehausse 114, empêchant ainsi le passage des particules solides vers le dispositif de distribution 110.

Dans ce mode de réalisation, comme dans celui de la figure 3, le ballon 311 est obtenu par soudure de deux surfaces en Kevlar®. A l'état dégonflé, ce ballon est donc relativement plat. Un élément de tôle 322 est disposé à l'intérieur de ce ballon 311.

Une fois la manche 140 ainsi rabattue contre la rehausse 114, il est possible de rouvrir un chemin de circulation des particules solides en commandant un dégonflage du ballon 311. Si l'opérateur saisit un tel ordre de commande, le pupitre de commande 351 isole alors le conduit 312 du conduit 353, et raccorde ce conduit 312 au conduit d'échappement 354, lequel est en communication fluide avec une pompe à vide. L'air présent dans le ballon 311 est alors évacué vers ce conduit 354. Le ballon 311 étant réalisé en matériau rigide et relativement plat, et, étant structuré par l'élément de tôle 322, ce ballon vient retrouver sa forme initiale. En outre, la manche 140 vient également retrouver sa forme initiale, c'est-à-dire que la section efficace de cette manche 140 au niveau du ballon 311 augmente, de par le choix du matériau choisi pour cette manche 140 et/ou parce que des particules solides 107 tendent à s'écouler à travers cette manche 140.

La figure 3 montre un exemple plus précis d'un élément de ballon 311' selon un mode de réalisation de l'invention, cet élément de ballon étant légèrement différent de l'élément de ballon également référencé 311 sur la figure 1, notamment en ce qui concerne l'arrivée d'air et la fixation. Ce ballon comprend un élément de tôle 322' pour structurer et rigidifier le ballon à l'état dégonflé. Sur cet élément de tôle sont soudés deux inserts taraudés 323 et une tubulure ¼ 324, ces éléments 323, 324 étant ainsi dressés par rapport au plan de l'élément de tôle 322'.

Les inserts taraudés 323 sont borgnes et destinés à la fixation du ballon sur un conduit rigide du type du conduit référencé 114 sur la figure 1.

La tubulure ¼ 324 débouche de part et d'autre de l'élément de tôle 322'. Un conduit d'arrivée d'air et d'échappement, du type du conduit référencé 312 sur les figures 1 et 2 pourra être fixé de façon étanche sur cette tubulure.

Pour fabriquer le ballon, après soudage des éléments 323, 324 sur l'élément de tôle 322', on installe une première feuille de Kevlar® définissant trois orifices à des emplacements correspondant aux emplacements des éléments 323, 324 sur l'élément de tôle 322', puis on soude cette feuille autour de ces éléments 323, 324 par vulcanisation. Une deuxième feuille de Kevlar® est alors disposée de l'autre coté de l'élément de tôle 322', puis soudée également par vulcanisation à la première feuille, sur leurs contours respectifs, de façon à former une structure en Kevlar® 425.

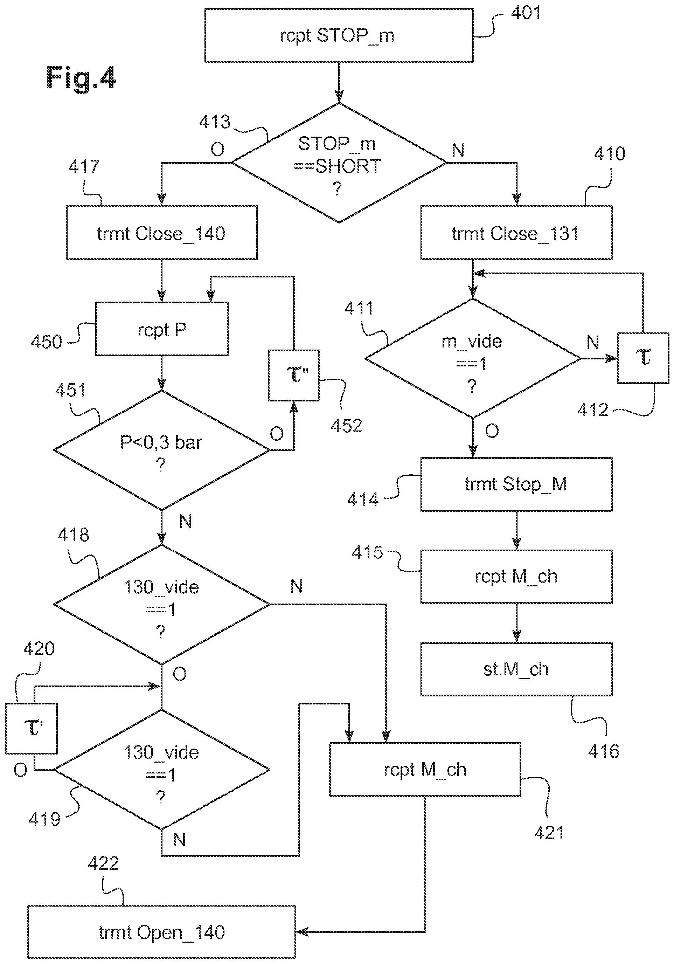

La figure 4 montre un exemple de procédé exécutable par l'ordinateur 350.

Suite à la réception de données saisies par l'utilisateur indiquant que cet utilisateur souhaite arrêter le chargement (étape 401), le procédé comprend une étape 413 consistant à comparer ces données saisies à une valeur SHORT indiquant que l'arrêt sera court. Si ce test 413 est négatif, c'est-à-dire si l'utilisateur a saisi des données correspondant à un arrêt long ou définitif, alors le procédé comprend une étape consistant à transmettre un message de fermeture de vanne close_131 vers un actionneur non représenté de la vanne référencée 131 sur la figure 1. Ainsi on commence par fermer la communication entre la trémie 130 et le reste de l'installation de chargement, au cours d'une étape 410.

Puis l'ordinateur reçoit d'un capteur non représenté des valeurs de mesure permettant de déduire si la manche référencée 140 est vidée ou non. Si ces mesures permettent de déduire que la manche est vidée, alors un drapeau m_vide est mis à 1 au cours d'une étape non représentée.

Le procédé comprend une étape de test 411 au cours de laquelle on compare la valeur de ce drapeau m_vide à 1. Tant que cette valeur est égale à 0, le système se place dans un état d'attente, au cours d'une étape 412. Dit autrement, ces étapes 411, 412 permettent d'attendre que la manche soit complètement vidée.

La détection de ce que la manche est vide peut être effectuée au moyen d'un capteur de la vitesse de rotation des pâles 119 du dispositif de chargement 110. En effet, lorsque la manche 140 est vidée, on s'attend à ce que la vitesse de rotation augmente.

Une fois la manche vidée, le système transmet un message d'arrêt du moteur du dispositif de distribution 110, au cours d'une étape 414, puis l'utilisateur saisit une valeur de masse chargée dans l'enceinte M_ch et cette valeur est reçue au cours d'une étape 415 puis conservée en mémoire au cours d'une étape 416.

Si a contrario l'utilisateur a saisi des données indiquant que l'arrêt serait court, c'est-à-dire si le test 413 est positif, alors le système 350 transmet vers le pupitre 351 un message de fermeture de la manche 140, au cours d'une étape 417.

On surveille ensuite la pression du ballon afin de s'assurer de son gonflage. Une valeur de pression est reçue au cours d'une étape 450. Si cette valeur est inférieure à un seuil de 0,3 bar (test 451), une étape d'attente 452 est effectuée. Les étapes 450, 451, 452 forment une boucle dont le système ne sort que lorsque la pression atteint ou dépasse cette valeur seuil de 0,3 bar. On peut prévoir des étapes additionnelles, non représentées, pour transmettre un message d'alarme si le système reste trop longtemps dans cette boucle.

Cette surveillance de la fermeture de la manche au moyen d'un capteur de pression peut être plus avantageuse qu'une simple surveillance auditive, comme envisageable dans l'art antérieur, car l'opérateur peut alors être situé plus loin de l'enceinte.

Une fois la fermeture de la manche détectée, lorsque le test 451 est négatif, il est procédé à un test 418 quant à une valeur de drapeau relatif au niveau de remplissage de la trémie 130. Si les capteurs permettent de détecter le fait que cette trémie 130 est vide, alors le drapeau 130_vide est mis à 1. Si le test 418 est positif, c'est-à-dire si la trémie 130 est estimée vide, alors un message est affiché pour inviter l'opérateur à remplir cette trémie 130, au cours d'une étape non représentée.

En outre, une nouvelle étape de test 419 quant à la valeur du drapeau 130_vide et une étape d'attente 420 permettent de placer le système dans un état d'attente tant que la trémie 130 n'est pas remplie.

L'arrêt momentané du chargement peut ainsi être mis à profit pour recharger la trémie. La fermeture de la manche peut permettre d'éviter un régime transitoire pendant lequel le chargement de l'enceinte serait effectué avec un débit moindre qu'en régime permanent.

Si le test 418 ou le test 419 montre que la trémie 130 est au moins partiellement remplie, alors l'opérateur saisit une valeur de masse chargée, et cette valeur est reçue au cours d'une étape 421.

On peut prévoir en outre d'autres étapes consistant à recevoir des valeurs mesurées, par exemple des valeurs issues de capteurs non représentés sur la figure 1, par exemple des capteurs de niveau du lit de particules chargées 107.

Une fois ce contrôle de la quantité de particules chargées effectué, ou, le cas échéant, une fois ce remplissage de la trémie effectué, le système transmet un message d'ouverture de la manche, au cours d'une étape 422. Le chargement reprend alors.

Le ballon 311 permet de fermer la manche 140 à proximité du dispositif de chargement 110, ce qui peut permettre de mettre fin relativement rapidement à l'introduction de particules solides dans l'enceinte. En effet, les particules présentes dans la manche 140 avant cette fermeture au niveau de la portion 141, restent à l'intérieur de la manche 140 tant que le ballon n'est pas dégonflé.

Pour revenir à la figure 4, on pourra d'ailleurs prévoir après l'étape 422 des étapes non représentées de surveillance de la pression à l'intérieur du ballon, afin de s'assurer de son dégonflage.

Le logigramme de la figure 4 illustre un processus conduisant à interrompre provisoirement ou définitivement le chargement. Pour démarrer le chargement, on pourra prévoir de transmettre un message pour gonfler le ballon 311 avant l'ouverture de la vanne 131. Dit autrement, une fois cette vanne 131 ouverte, les particules viennent remplir la manche 140. On attend que la manche soit pleine pour commander le dégonflage du ballon, et donc autoriser le passage des particules vers le dispositif de distribution 110.

Plus précisément, le procédé pourra comprendre une étape pour le réglage des ouvertures 118 du dispositif de distribution 110, une étape de commande d'allumage du moteur pour que les pâles 119 soient en rotation, une étape de transmission d'un message pour fermer la manche 140, une étape de transmission d'un message pour ouvrir la trémie au moyen de la vanne 131, des étapes permettant d'attendre que la manche soit pleine, une étape de transmission d'un message d'ouverture de la manche, et enfin des étapes pour régler la vitesse de rotation du dispositif de distribution 110.

Ces différentes étapes peuvent être effectuées sur l'ordinateur 350, sous le contrôle d'un opérateur situé à proximité de cet ordinateur 350.

## Revendications

1. Installation de chargement en particules solides d'un réacteur de raffinerie et/ou de pétrochimie comprenant un réacteur de raffinerie et/ou de pétrochimie (100) muni d'une ouverture de remplissage (113), et un ensemble de chargement qui comprend
un dispositif de distribution (110) pour charger par effet de pluie ledit réacteur en particules solides comprenant des particules de catalyseurs et/ou des billes inertes, installé dans ladite ouverture du réacteur, ledit dispositif étant agencé de façon à homogénéiser et/ou uniformiser le chargement de particules solides dans le réacteur,
un système d'alimentation (200) du dispositif de distribution, le système d'alimentation comprenant une manche souple (140) destinée à être raccordée à une réserve de particules solides (130) d'une part, et au dispositif de distribution d'autre part, dans laquelle les particules solides sont aptes à circuler, généralement du haut vers le bas,
un système de pilotage (300) du système d'alimentation, comprenant :
- un dispositif de blocage (310) des particules circulant dans la manche souple, adjacent à une portion (141) de la manche souple et apte à, lorsqu'actionné, entrainer en mouvement des parois de la manche souple de façon à réduire une section efficace de ladite manche au niveau de ladite portion, et
- un dispositif d'actionnement (350) du dispositif de blocage situé à une distance du dispositif de blocage supérieure ou égale au rayon de la base du réacteur.

2. Installation selon la revendication 1, dans laquelle le dispositif de blocage (310) est agencé de façon à pousser les parois de la manche souple (140) contre un conduit rigide ou semi-rigide (114) à l'intérieur duquel passe ladite manche souple au niveau de la portion (141) adjacente au dispositif de blocage.

3. Installation selon l'une des revendications 1 ou 2, dans laquelle l'actionnement dudit dispositif de blocage est pneumatique.

4. Installation selon l'une des revendications 1 à 3, dans laquelle le dispositif de blocage (310) comporte un élément de ballon (311) en communication pneumatique avec un conduit d'alimentation en gaz (312).

5. Installation selon la revendication 4, dans laquelle l'élément de ballon (311) est apte à être raccordé à un réseau pneumatique au moyen d'un seul conduit (312).

6. Installation selon l'une des revendications 4 ou 5, dans laquelle l'élément de ballon (311) comprend deux parties planes en matériau souple solidarisées entre elles de façon étanche.

7. Installation selon l'une quelconque des revendications 1 à 6, dans laquelle le dispositif de distribution (110) comprend des moyens de répartition (118, 119) aptes à conférer aux particules solides une vitesse avec une composante perpendiculaire à la direction verticale.

8. Installation selon la revendication 7, dans laquelle les moyens de répartition comprennent des pâles (119) et un moteur pour entrainer ces pâles en rotation autour d'un axe vertical.

9. Utilisation de d'une installation selon l'une quelconque des revendications 1 à 8 pour gérer le chargement en particules de catalyseur et/ou en billes inertes d'un réacteur de raffinage et/ou de pétrochimie.

10. Procédé de pilotage d'un système d'alimentation d'un dispositif de distribution par effet de pluie installé dans une ouverture de remplissage d'un réacteur de raffinage et/ou de pétrochimie pour charger ledit réacteur en particules solides comprenant des particules de catalyseurs et/ou des billes inertes, le dispositif de distribution étant agencé pour homogénéiser et/ou uniformiser le chargement de particules solides, ce système d'alimentation comprenant une manche souple destinée à être raccordée d'une part à une réserve de particules solides et d'autre part au dispositif de distribution, et dans laquelle les particules solides sont aptes à circuler, généralement du haut vers le bas, comprenant
une étape (417) de commande d'actionnement à distance d'un dispositif de blocage des particules circulant dans la manche souple, ledit dispositif étant agencé pour déplacer les parois de ladite manche souple, de façon à réduire une section efficace de ladite manche.

11. Produit programme d'ordinateur comprenant les instructions pour effectuer les étapes du procédé selon la revendication 10 lorsque lesdites instructions sont exécutées par un processeur.

## Patentansprüche

1. Anlage zur Ladung mit festen Partikeln eines Raffinerie- und/oder Petrochemiereaktors, umfassend einen Raffinerie- und/oder Petrochemiereaktor (100), der mit einer Füllöffnung (113) ausgestattet ist, und eine Ladeeinheit, die Folgendes umfasst
eine Verteilungsvorrichtung (110) zum Laden durch Regeneffekt des Reaktors mit festen Partikeln, umfassend Katalysatorpartikel und/oder inerte Kugeln, die in der Öffnung des Reaktors installiert ist, wobei die Vorrichtung angeordnet ist, um die Ladung von festen Partikeln im Reaktor zu homogenisieren und/oder zu uniformieren,
ein Versorgungssystem (200) der Verteilungsvorrichtung, wobei das Versorgungssystem einen flexiblen Schlauch (140) umfasst, der ausgelegt ist, um mit einer Reserve von festen Partikeln (130) einerseits und mit der Verteilungsvorrichtung andererseits verbunden zu sein, wobei die festen Partikel geeignet sind, um im Allgemeinen von oben nach unten zu zirkulieren,
ein Steuerungssystem (300) des Versorgungssystems, umfassend:
- eine Vorrichtung zur Blockierung (310) der Partikel, die im flexiblen Schlauch zirkulieren, benachbart einem Abschnitt (141) des flexiblen Schlauchs und geeignet, um, bei Betätigung, eine Bewegung der Wände des flexiblen Schlauchs zu verursachen, um einen wirksamen Schnitt des Schlauchs auf der Ebene des Abschnitts zu reduzieren, und
- eine Vorrichtung zur Betätigung (350) der Vorrichtung zur Blockierung, die sich in einem Abstand von der Vorrichtung zur Blockierung befindet, der größer oder gleich dem Radius der Basis des Reaktors ist.

2. Anlage nach Anspruch 1, wobei die Vorrichtung zur Blockierung (310) angeordnet ist, um die Wände des flexiblen Schlauchs (140) gegen eine starre oder halbstarre Leitung (114) zu schieben, in deren Inneren der flexible Schlauch auf der Ebene des Abschnitts (141) benachbart der Vorrichtung zur Blockierung verläuft.

3. Anlage nach einem der Ansprüche 1 oder 2, wobei die Betätigung der Vorrichtung zur Blockierung pneumatisch ist.

4. Anlage nach einem der Ansprüche 1 bis 3, wobei die Vorrichtung zur Blockierung (310) ein Ballonelement (311) umfasst, das in pneumatischer Kommunikation mit einer Leitung zur Versorgung mit Gas (312) ist.

5. Anlage nach Anspruch 4, wobei das Ballonelement (311) geeignet ist, um mit einem pneumatischen Netz mit Hilfe einer einzigen Leitung (312) verbunden zu sein.

6. Anlage nach einem der Ansprüche 4 oder 5, wobei das Ballonelement (311) zwei ebene Teile aus flexiblem Material umfasst, die untereinander auf dichte Weise fest verbunden sind.

7. Anlage nach einem der Ansprüche 1 bis 6, wobei die Verteilungsvorrichtung (110) Mittel zur Verteilung (118, 119) umfasst, die geeignet sind, um den festen Partikeln eine Geschwindigkeit mit einer senkrechten Komponente zur vertikalen Richtung zu verleihen.

8. Anlage nach Anspruch 7, wobei die Verteilungsmittel Flügel (119) und einen Motor umfassen, um diese Flügel in Drehung um eine vertikale Achse zu versetzen.

9. Verwendung einer Anlage nach einem der Ansprüche 1 bis 8, um die Ladung mit Katalysatorpartikeln und/oder mit inerten Kugeln eines Raffinierungs- und/oder Petrochemiereaktors zu verwalten.

10. Steuerungssystem eines Versorgungssystems einer Verteilungsvorrichtung durch Regeneffekt, die in einer Füllöffnung eines Raffinierungs- und/oder Petrochemiereaktors installiert ist, um den Reaktor mit festen Partikeln zu laden, umfassend Katalysatorpartikel und/oder inerte Kugeln, wobei die Verteilungsvorrichtung angeordnet ist, um die Ladung von festen Partikeln zu homogenisieren und/oder zu uniformieren, wobei dieses Versorgungssystem einen flexiblen Schlauch umfasst, der ausgelegt ist, um einerseits mit einer Reserve von festen Partikeln und andererseits mit der Verteilungsvorrichtung verbunden zu sein, und wobei die festen Partikel geeignet sind, um im Allgemeinen von oben nach unten zu zirkulieren, umfassend
einen Schritt (417) des Fernsteuerns der Betätigung einer Vorrichtung zur Blockierung der Partikel, die im flexiblen Schlauch zirkulieren, wobei die Vorrichtung angeordnet ist, um die Wände des flexiblen Schlauchs zu verschieben, um einen wirksamen Schnitt des Schlauchs zu reduzieren.

11. Computerprogrammprodukt, umfassend die Anweisungen, um die Schritte des Verfahrens nach Anspruch 10 durchzuführen, wenn die Anweisungen von einem Prozessor ausgeführt werden.

## Claims

1. A facility for loading with solid particles a refining and/or petrochemical reactor, comprising a refining and/or petrochemical reactor (100) provided with a filling opening (113) and a loading assembly comprising
a dispensing device (110) for loading by rain effect said reactor with solid particles comprising catalyst particles and/or inert beads, installed in said filling opening of the rector, said device being arranged such as to homogenize and/or make uniform the loading of solid particles into the reactor,
a system (200) for supplying the dispensing device, said supply system comprising a flexible sleeve (140) intended to be connected to a solid particle reserve (130) firstly, and to the dispensing device secondly, wherein the solid particles can flow, generally from the top to the bottom,
a system (300) for controlling the supply system, comprising:
- a device (310) for blocking the particles flowing in the flexible sleeve, which device is adjacent to a portion (141) of the flexible sleeve and suitable for, when activated, moving walls of the flexible sleeve such as to reduce an effective cross-section of said sleeve at said portion, and
- a device (350) for actuating the blocking device located at a distance from the blocking device greater than or equal to the radius of the base of the reactor.

2. The facility as claimed in claim 1, wherein the blocking device (310) is arranged such as to urge the walls of the flexible sleeve (140) against a rigid or semi-rigid pipe (114) through which said flexible sleeve passes at the portion (141) adjacent to the blocking device.

3. The facility according to any one of claims 1 or 2, wherein the actuation of the blocking device is pneumatic.

4. The facility as claimed in any one of claims 1 to 3, wherein the blocking device (310) includes a balloon element (311) pneumatically connected to a gas supply pipe (312).

5. The facility as claimed in one of claims 1-4, wherein the balloon element (311) is adapted to be connected to a pneumatic network by means of a single pipe (312).

6. The assembly as claimed in one of claims 4 or 5, wherein the balloon element (311) comprises two planar parts made from flexible material, which are connected to one another in a sealed manner.

7. The assembly as claimed in any one of claims 1-6, wherein the dispensing device (110) comprises distributing means (118, 119) suitable for giving the solid particles a speed with a component perpendicular to the vertical direction.

8. The assembly as claimed in claim 7, wherein the distribution means comprise blades (119) and a motor to rotate these blades about a vertical axis.

9. A use of the facility as claimed in any one of claims 1-8 in order to manage the loading of a refining and/or petrochemical reactor with catalyst particles and/or inert beads.

10. A method of controlling a system for supplying a rain effect dispensing device installed in a filling opening of a refining and/or petrochemical reactor for loading said reactor with solid particles comprising catalyst particles and/or inert beads, the dispensing device being arranged to homogenize and/or make uniform the loading of solid particles, this supply system comprising a flexible sleeve intended to be connected firstly to a reserve of solid particles and secondly to the dispensing device, and wherein the solid particles can flow, generally from the top to the bottom, comprising
a step (417) for commanding remote actuation of a device for blocking the particles flowing in the flexible sleeve, said device being arranged to move the walls of said flexible sleeve, such as to reduce an effective cross-section of said sleeve.

11. A computer program product comprising the instructions for carrying out the steps of the method as claimed in claim 10 when said instructions are executed by a processor.
